# FASCICULE DE BREVET EUROPEEN

(11) **EP 2 769 453 B1**
(45) Date de publication et mention de la délivrance du brevet: **08.11.2017**
(21) Numéro de dépôt: 12773056.2
(22) Date de dépôt: 18.09.2012
(51) Int. Cl.: H02J 1/00, H02J 11/00, H02M 5/08, H04B 3/54

(54) **ALIMENTATION CONTINUE BASSE TENSION POUR DISPOSITIFS ÉLECTRONIQUES DE COMMUNICATION**
NIEDRIGE GLEICHSPANNUNGSVERSORGUNG FÜR ELEKTRONISCHE KOMMUNIKATIONSGERÄTE
LOW DC VOLTAGE SUPPLY FOR ELECTRONIC COMMUNICATION DEVICES

(30) Priorité: 19.10.2011 FR 1159458
(43) Date de publication de la demande: 27.08.2014
(73) Titulaire: Nexans, 92400 Courbevoie (FR)
(72) Inventeur: WEBER, Hervé, F-08000 Charleville-Mézières (FR); THOMAS, Borja, F-75002 Paris (FR); de RIDDER, Eduard, B-9310 Herdersem-aalst (BE)
(74) Mandataire: Hervouet-Malbec, Sylvie
(86) Numéro de dépôt international: PCT/FR2012/052085
(87) Numéro de publication internationale: WO 2013/057399

(56) Documents cités:
- WO-A1-2010/017549
- FR-A- 1 092 040
- JP-A- 2006 319 449
- US-A- 2 313 950

## Description

La présente invention concerne de manière générale l'alimentation en basse tension continue des dispositifs électroniques de communication susceptibles d'être utilisés dans une portion moyenne tension d'un système de communication à courant porteur en ligne.

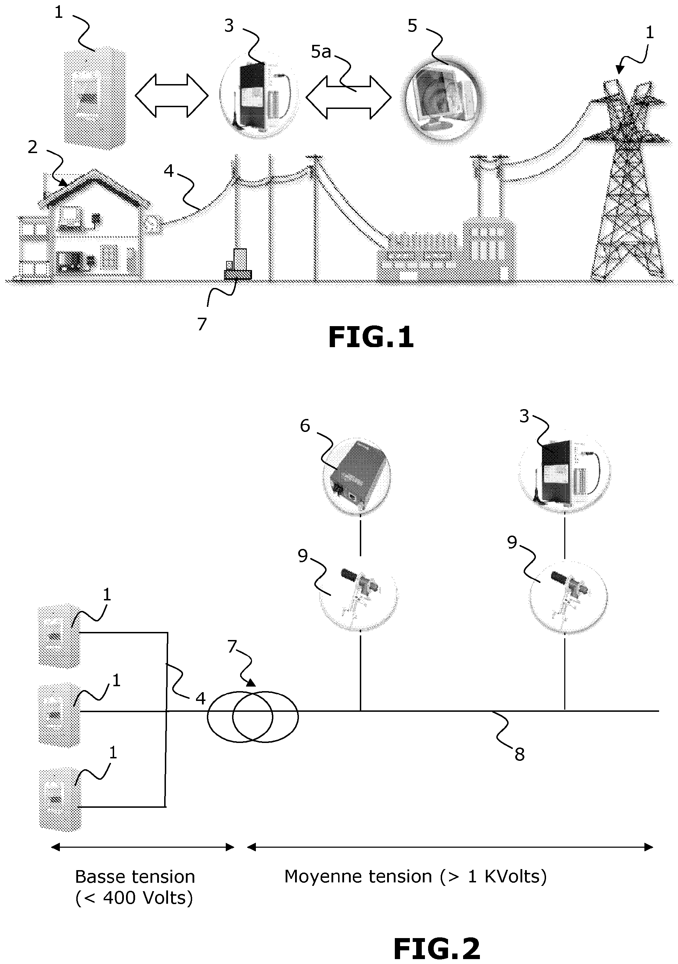

Un domaine d'application non limitatif de l'invention concerne les systèmes de télé relèves de compteurs d'énergie, en particulier des compteurs d'électricité. Certains fournisseurs d'électricité, tels que la Compagnie française ERDF, sont aujourd'hui en cours de déploiement de systèmes utilisant les lignes électriques du réseau de distribution électrique pour permettre une communication, de préférence bidirectionnelle, de données entre les compteurs d'électricité installés chez les utilisateurs et des concentrateurs chargés de collecter les données d'un ensemble de compteurs. La figure 1 donne schématiquement la configuration d'un tel système, en indiquant dans la partie haute de la figure la couche de communication du système en regard de la couche physique d'un réseau de distribution d'énergie : Un compteur électrique 1 situé au domicile 2 d'un utilisateur échange des données avec un concentrateur 3 en utilisant les lignes électriques 4 à basse tension (typiquement entre 220 et 400 Volts) du réseau de distribution électrique. Cette technologie dite CPL (pour Courant Porteur en Ligne) consiste à superposer au signal électrique basse fréquence du réseau de distribution électrique (typiquement 50 Hz en France, ou 60 Hz aux Etats-Unis) un signal de faible énergie à plus haute fréquence, typiquement dans la bande de fréquence dite CENELEC A (de 10 KHz à 95 KHz). Lorsque le concentrateur 3 reçoit les données de différents compteurs 1, il les décode grâce à un modem CPL adapté, et les traite en vue de leur retransmission à un serveur central 5 du distributeur d'énergie par tout réseau de communication étendu WAN 5a approprié.

Outre le concentrateur, des équipements complémentaires peuvent être ajoutés au niveau de la portion moyenne tension du réseau de distribution électrique. En particulier, comme le signal CPL faiblit avec la distance, il peut être nécessaire de le régénérer lorsque le concentrateur est trop éloigné. Pour ce faire, comme représenté sur la figure 2, il peut être nécessaire de rajouter un, voire plusieurs répéteurs 6 pour régénérer le signal CPL autant de fois que nécessaire jusqu'au concentrateur 3.

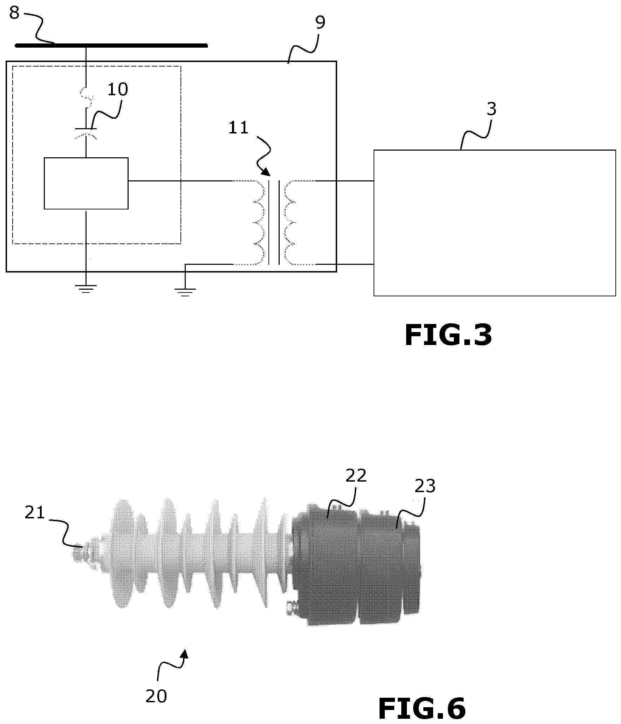

Quel que soit l'équipement considéré (concentrateur 3, répéteur 6 ou tout autre équipement électronique susceptible d'injecter et/ou de prélever le signal CPL), celui-ci doit pouvoir s'interfacer avec la ligne électrique moyenne tension 8 au moyen d'un dispositif de couplage. Aujourd'hui, on utilise pour ce faire un coupleur 9 à courant porteur en ligne relié électriquement à la ligne moyenne tension 8 du réseau électrique de distribution. Ce coupleur 9 doit permettre le passage du signal CPL tout en rejetant la fréquence du réseau électrique, et protéger l'équipement contre la tension du réseau électrique et les tensions transitoires qui pourraient résulter d'opérations de commutation. La figure 3 illustre schématiquement un mode de réalisation possible connu pour le coupleur 9, en association avec un concentrateur 3. Le coupleur 9 comporte essentiellement un condensateur 10 de couplage et un transformateur d'isolation 11 agencés de telle façon que:
- le condensateur 10 de couplage soit relié électriquement d'une part avec la ligne moyenne tension 8, et d'autre part, en série avec le transformateur d'isolation 11;
- le secondaire du transformateur d'isolation 11 soit connecté au concentrateur 3.

Un module de compensation 10' est interposé en série entre le condensateur 10 de couplage et le primaire du transformateur d'isolation 11 pour permettre d'adapter le filtrage, et en particulier obtenir une faible atténuation dans la bande passante du signal CPL.

Le document JP 2006 319449 divulgue un procédé pour l'alimentation en basse tension continue d'au moins un dispositif électronique de communication dans un système de communication à courant porteur en ligne selon le préambule de la revendication 1.

Tous les équipements électroniques précités comportent des composants actifs (microprocesseurs, amplificateurs...) qui doivent être alimentés par une ou plusieurs valeurs de tension continue, typiquement de l'ordre de 3,3 Volts ou de 12 Volts. Aujourd'hui, le concentrateur 3 est généralement situé au niveau d'un poste de transformation électrique Moyenne Tension/Basse Tension 7 du réseau de distribution électrique, ce qui permet de dériver la tension nécessaire à l'alimentation à partir des lignes à basse tension du réseau électrique.

Il n'est en revanche pas possible d'envisager de placer le concentrateur à un autre endroit, typiquement plus en amont dans la portion moyenne tension du réseau, sauf à trouver une solution pour l'alimentation des composants actifs. Les répéteurs sont quant à eux placés sur la portion moyenne tension du réseau de distribution électrique, à des endroits où le réseau basse tension n'est généralement pas présent.

La présente invention a pour but de proposer une solution simple, peu coûteuse, et compacte au problème de l'alimentation en basse tension continue des dispositifs électroniques de communication aptes à être couplés à une ligne moyenne tension du réseau électrique de distribution.

Pour ce faire, l'invention a pour objet un procédé pour l'alimentation en basse tension continue d'au moins un dispositif électronique de communication dans un système de communication à courant porteur en ligne comportant en outre un coupleur à courant porteur en ligne pour un couplage à une ligne moyenne tension d'un réseau électrique de distribution, caractérisé en ce que, le coupleur à courant porteur en ligne comprenant un condensateur de couplage relié électriquement à ladite ligne moyenne tension, le procédé comprend une étape de génération d'une première valeur de basse tension continue à partir d'une conversion courant-tension du courant de fuite relatif audit condensateur de couplage, ladite première valeur de basse tension continue étant apte à servir d'alimentation à au moins un composant électronique actif dudit au moins un dispositif électronique de communication.

La présente invention a également pour objet un système d'alimentation en basse tension continue d'au moins un dispositif électronique de communication dans un système de communication à courant porteur en ligne comportant en outre un coupleur à courant porteur en ligne pour un couplage à une ligne moyenne tension d'un réseau électrique de distribution, caractérisé en ce que ledit coupleur à courant porteur en ligne comprend un condensateur de couplage relié électriquement, et en ce que le système comprend des moyens de génération d'une première valeur de basse tension continue à partir d'une conversion courant-tension du courant de fuite relatif audit condensateur de couplage, ladite première valeur de basse tension continue étant apte à servir d'alimentation à au moins un composant électronique actif dudit au moins un dispositif électronique de communication.

Selon d'autres particularités possibles du système :
- les moyens de génération peuvent comporter au moins une unité de conversion comprenant un condensateur relié en série avec le condensateur de couplage et un moyen de transformation recevant en entrée la tension aux bornes dudit condensateur et délivrant ladite première valeur de basse tension continue ;
- les moyens de génération comportent avantageusement un nombre entier n supérieur à 1 d'unités de conversion reliées entre elles de sorte que les condensateurs de chaque unité de conversion soient reliés en série avec le condensateur de couplage, chacune desdites unités délivrant un nième de ladite première valeur de basse tension continue ;
- le système peut comporter en outre un moyen abaisseur de tension continue recevant en entrée ladite première valeur de basse tension continue et délivrant une deuxième valeur de basse tension continue inférieure à la première valeur de tension continue. Ce moyen abaisseur de tension continue peut être intégré dans lesdits moyens de génération ;
- le coupleur à courant porteur en ligne et les moyens de génération, voire le dispositif électronique de communication, peuvent être avantageusement intégrés dans un même équipement ;
- l'équipement est alors apte à être installé sur un poteau électrique moyenne tension du réseau électrique de distribution ;
- le dispositif électronique de communication peut être un concentrateur, un répéteur, ou une passerelle CPL/radiofréquence d'un système de télé relève de compteurs électriques ou de surveillance du réseau électrique de distribution.

L'invention sous ses différents aspects sera mieux comprise au vu de la description suivante non limitative d'un système apte à la télé relève de compteurs électriques, faite en référence aux figures annexées, dans lesquelles :
- la figure 1 déjà décrite illustre schématiquement l'architecture d'un système de télé relève de compteurs électriques utilisant le réseau de distribution d'énergie électrique ;
- la figure 2 déjà décrite illustre schématiquement une implémentation connue du système de la figure 1 ;
- la figure 3 déjà décrite représente un coupleur de courant porteur en ligne connu apte à coupler un dispositif électronique avec une ligne moyenne tension du réseau de distribution ;
- la figure 4 représente schématiquement un système d'alimentation selon un premier mode de réalisation possible conforme à la présente invention ;
- la figure 5 représente schématiquement un système d'alimentation selon un deuxième mode de réalisation possible conforme à la présente invention ;
- la figure 6 illustre un équipement selon l'invention intégrant le coupleur et le répéteur ou le concentrateur.

La présente invention part du constat que le coupleur à courant porteur en ligne servant à faire le couplage entre la ligne moyenne tension du réseau de distribution électrique et tout dispositif électronique de communication tel qu'un concentrateur, un répéteur, ou autre, présente un courant de fuite, connu sous l'appellation anglo-saxonne de « leakage current ». Ce courant de fuite est très faible, de l'ordre de quelques milliampères pour un condensateur de couplage de 1,5 nanofarads, et est généralement considéré comme un courant parasite.

La présente invention consiste à utiliser ce courant de fuite pour générer les valeurs de tensions continues nécessaires à l'alimentation des composants actifs des dispositifs électroniques de communication couplés à la ligne moyenne tension au travers de ce condensateur de couplage.

Ainsi, le procédé selon l'invention comprend une étape de génération d'une première valeur de basse tension continue à partir d'une conversion courant-tension du courant de fuite relatif au condensateur de couplage, ladite première valeur de basse tension continue étant apte à servir d'alimentation à au moins un composant électronique actif d'au moins un dispositif électronique de communication couplé à la ligne moyenne tension du réseau de distribution d'énergie.

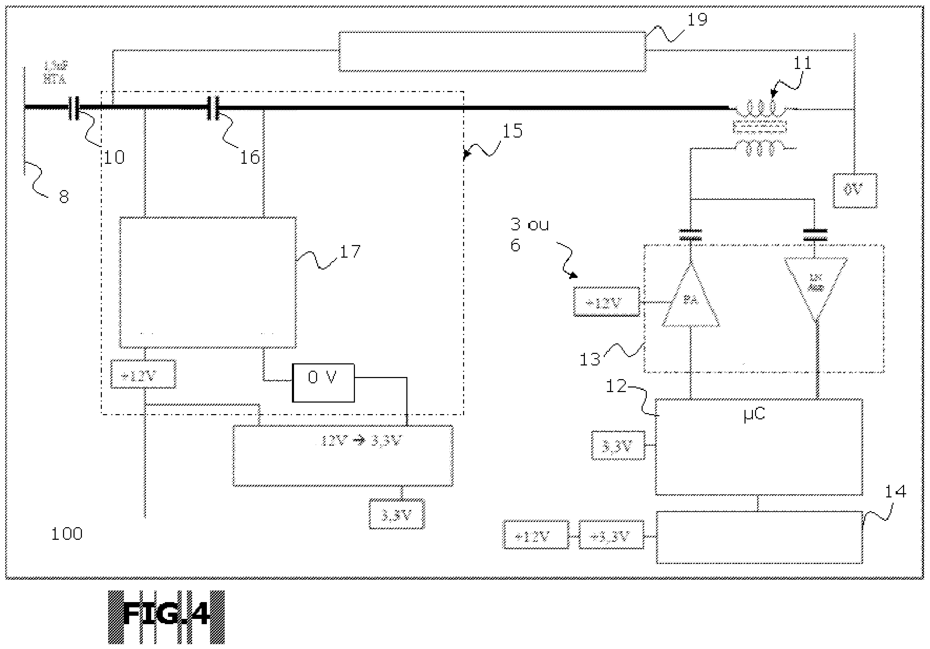

La figure 4 illustre schématiquement un système 100 d'alimentation mettant en oeuvre le procédé selon un premier mode de réalisation possible de l'invention. On retrouve sur cette figure les éléments déjà décrits précédemment tels que le condensateur 10 de couplage et le transformateur d'isolation 11 constitutifs d'un coupleur à courant porteur en ligne permettant à un dispositif électronique de communication tel qu'un concentrateur 3 ou un répéteur 6 de prélever et/ou d'injecter un signal CPL sur une ligne électrique 8 moyenne tension du réseau de distribution électrique. Comme indiqué à droite de la figure, le dispositif électronique 3 ou 6 comporte différents composants actifs, typiquement un microcontrôleur 12, un circuit analogique 13 servant d'interface entre le microcontrôleur 12 et le transformateur d'isolation 11 et comprenant des amplificateurs de puissance, et éventuellement d'autres composants tels qu'un module de communication radiofréquence 14 ou un module de communication par fibre optique. Tous ces composants actifs ont besoin d'être alimentés par une tension continue de faible voltage. Dans l'exemple non limitatif représenté, le microcontrôleur 12 nécessite une alimentation de 3,3 Volts, alors que les amplificateurs de puissance du circuit analogique 13 nécessitent une alimentation de 12 Volts. En outre, certains composants actifs du module 14 peuvent nécessiter une alimentation de 3,3 Volts, d'autres, une alimentation de 12 Volts.

Conformément à l'invention, le système 100 comprend des moyens 15 de génération d'une première valeur de basse tension continue, ici 12 Volts, à partir d'une conversion courant-tension du courant de fuite relatif audit condensateur 10 de couplage, ladite première valeur de basse tension continue étant apte à servir d'alimentation à au moins un composant électronique actif du dispositif électronique de communication, en particulier ici aux amplificateurs de puissance du circuit analogique 13 et à certains composants du module de communication 14 radiofréquence ou à fibre optique. Les moyens 15 de génération comportent ici une unité de conversion comprenant un condensateur 16 relié en série avec le condensateur de couplage 10, entre le condensateur de couplage et le primaire du transformateur d'isolation 11, et un moyen de transformation 17 recevant en entrée la tension aux bornes dudit condensateur 16 et délivrant la première valeur de basse tension continue. Le moyen de transformation réalise globalement une élévation de la tension aux bornes du condensateur 16 pour obtenir la première valeur de tension continue.

Dans l'exemple représenté, le système 100 comporte en outre un moyen 18 abaisseur de tension continue recevant en entrée ladite première valeur de basse tension continue et délivrant une deuxième valeur de basse tension continue inférieure à la première valeur de tension continue, ici 3,3 Volts. Le moyen 18 abaisseur de tension continue peut être intégré ou non dans les moyens 15 de génération. Des moyens 19 de protection contre les surtensions de courant sont avantageusement prévus entre le condensateur de couplage et la masse.

Les valeurs du condensateur de couplage 10 et du condensateur additionnel 16 doivent être choisies pour permettre un couplage tout en optimisant l'encombrement. Une capacité de couplage importante permet un meilleur couplage, mais au détriment de l'encombrement. Avec les composants existant à ce jour, les essais de la Demanderesse ont montré que la valeur totale de la mise en série des condensateurs ne doit pas excéder 1,5 nanofarads pour garantir le meilleur compromis entre un bon couplage et un encombrement réduit. Dans l'exemple de la figure 4, on peut choisir un condensateur 16 d'une valeur de 10 nanoFarads, de sorte que la capacité équivalente résultant de la mise en série du condensateur de couplage 10 et du condensateur 16 est égale à 1,30 nanoFarads.

Un soin tout particulier doit être apporté à la réalisation des moyens de génération pour s'assurer qu'ils ne viennent pas perturber le rôle premier du coupleur de courant porteur en ligne. Une première mesure est d'éviter que le moyen 15 de génération ne vienne générer du bruit sur le signal de communication. Pour ce faire, on prévoit avantageusement un filtre EMI (non représenté) contre les interférences électromagnétiques en entrée du moyen de transformation 17.

En outre, les composants passifs (résistances, inductances et condensateurs) du module de compensation 10' doivent être adaptés pour tenir compte de la présence des moyens de génération 15 et garantir une faible atténuation dans la bande passante du signal CPL.

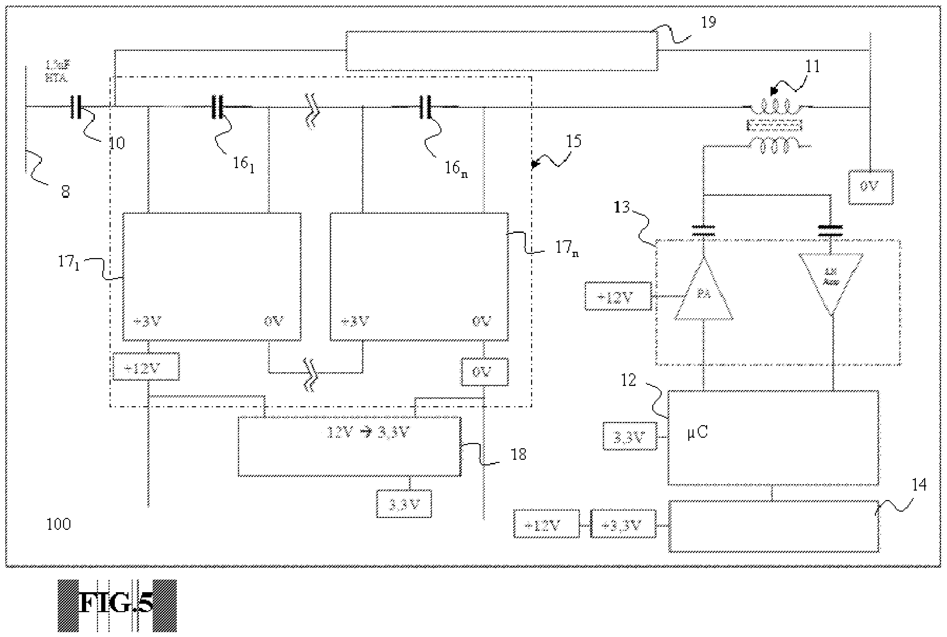

La figure 5 illustre un second mode de réalisation possible du système d'alimentation 100. Ici, les moyens de génération comportent un nombre entier n supérieur à 1 d'unités de conversion reliées entre elles de sorte que les condensateurs 16₁ à 16ₙ de chaque unité de conversion soient reliés en série avec le condensateur 8 de couplage, chacune desdites unités délivrant, en sortie de son moyen de transformation correspondant 17₁...17ₙ, un nième de ladite première valeur de basse tension continue. Ainsi, dans le cas où l'on souhaite obtenir une tension de 12 Volts, on peut mettre en cascade quatre unités de conversion délivrant chacune 3 Volts. Les sorties des unités de conversion étant elles-mêmes reliées en série, la tension de 12 Volts sera ici obtenue entre la sortie 3 Volts de la première unité de conversion 16₁ et la sortie 0 Volt de la quatrième unité de conversion. Chaque unité de conversion comprend en outre de préférence un filtre EMI (non représenté). Le choix du nombre d'unités de conversion résulte d'un compromis entre le nombre de composants et le stress en tension admissible sur les composants. Le tableau ci-après montre un comparatif des résultats obtenus pour un nombre d'unités de conversion variant de 1 à 4 :

| Nombre d'unités | Puissance entrée par unité (W) | Tension d'entrée d'une unité (V) | Puissance de sortie par unité (W) | Tension de sortie d'une unité | Capacité de chaque unité (nF) |
|---|---|---|---|---|---|
| 1 | 7,10 | 1420 | 5,0 | 12 | 5 |
| 2 | 3,55 | 710 | 2,5 | 6 | 10 |
| 3 | 2,37 | 473 | 1,7 | 4 | 15 |
| 4 | 1,78 | 355 | 1,3 | 3 | 20 |

Grâce à l'invention, on réutilise un courant jusqu'ici considéré comme parasite pour générer les valeurs basses tensions continues nécessaire à l'alimentation des composants actifs de tout dispositif de communication couplé à la ligne moyenne tension par le coupleur capacitif PLC. Les installations des dispositifs ne sont donc plus limitées aux seuls endroits où un transformateur basse tension/moyenne tension est présent, et peuvent être étendues à tout le réseau moyenne tension.

En outre, compte tenu des encombrements assez faibles, on peut envisager d'intégrer dans un même équipement le coupleur 9 à courant porteur en ligne, les moyens de génération 15, voire même le dispositif électronique de communication. La figure 6 représente un tel équipement 20 comprenant une extrémité 21 pour la connexion d'un câble (non représenté) à une ligne moyenne tension du réseau de distribution, un premier module 22 comportant le coupleur capacitif de courant porteur en ligne et les moyens de génération d'alimentation basse tension, et un deuxième module 23 correspondant au dispositif électronique de communication, ici un répéteur. L'équipement 20 constitue ainsi un répéteur auto alimenté, qui peut être installé au niveau de n'importe quel poteau électrique moyenne tension du réseau de distribution.

L'invention a été décrite essentiellement dans son application a un système de télé relève de compteurs électriques, mais peut bien entendu être appliqué à d'autres fins, par exemple dans un système de surveillance du réseau de distribution électrique comprenant des capteurs et des équipements transmettant les données captées par courant porteur en ligne.

## Revendications

1. Procédé pour l'alimentation en basse tension continue d'au moins un dispositif (3 ; 6) électronique de communication dans un système de communication à courant porteur en ligne comportant en outre un coupleur à courant porteur en ligne pour un couplage à une ligne moyenne tension (8) d'un réseau électrique de distribution, **caractérisé en ce que**, ledit coupleur à courant porteur en ligne comprenant un condensateur (10) de couplage relié électriquement la ligne moyenne tension (8), le procédé comprend une étape de génération d'une première valeur de basse tension continue à partir d'une conversion courant-tension du courant de fuite relatif audit condensateur (10) de couplage, ladite première valeur de basse tension continue étant apte à servir d'alimentation à au moins un composant (13) électronique actif dudit au moins un dispositif électronique (3 ; 6) de communication.

2. Procédé selon la revendication 1, **caractérisé en ce qu'**il comporte en outre une étape de transformation de ladite première valeur de basse tension continue en une deuxième valeur de basse tension continue inférieure à la première valeur de basse tension continue, ladite deuxième valeur de basse tension continue étant apte à servir d'alimentation à au moins un autre composant (12) électronique actif dudit au moins un dispositif électronique (3 ; 6) de communication.

3. Système (100) d'alimentation en basse tension continue d'au moins un dispositif (3 ; 6) électronique de communication dans un système de communication à courant porteur en ligne comportant en outre un coupleur à courant porteur en ligne pour un couplage à une ligne moyenne tension (8) d'un réseau électrique de distribution, **caractérisé en ce que** le coupleur à courant porteur en ligne comprend un condensateur (10) de couplage relié électriquement à ladite ligne moyenne tension (8), et **en ce que** le système comprend des moyens (15) de génération d'une première valeur de basse tension continue à partir d'une conversion courant-tension du courant de fuite relatif audit condensateur (10) de couplage, ladite première valeur de basse tension continue étant apte à servir d'alimentation à au moins un composant (13) électronique actif dudit au moins un dispositif (3 ; 6) électronique de communication.

4. Système (100) selon la revendication 3, **caractérisé en ce que** les moyens (15) de génération comportent au moins une unité de conversion comprenant un condensateur (16) relié en série avec le condensateur (10) de couplage et un moyen (17) de transformation recevant en entrée la tension aux bornes dudit condensateur (16) et délivrant ladite première valeur de basse tension continue.

5. Système (100) selon la revendication 4, **caractérisé en ce que** les moyens (15) de génération comportent un nombre entier n supérieur à 1 d'unités de conversion reliées entre elles de sorte que les condensateurs (16₁...16ₙ) de chaque unité de conversion soient reliés en série avec le condensateur de couplage, chacune desdites unités délivrant un nième de ladite première valeur de basse tension continue.

6. Système (100) selon l'une quelconque des revendications 4 ou 5, **caractérisé en ce qu'**il comporte en outre un moyen (18) abaisseur de tension continue recevant en entrée ladite première valeur de basse tension continue et délivrant une deuxième valeur de basse tension continue inférieure à la première valeur de tension continue.

7. Système (100) selon la revendication 6, **caractérisé en ce que** ledit moyen (18) abaisseur de tension continue est intégré dans lesdits moyens de génération.

8. Système (100) selon l'une quelconque des revendications 3 à 7, **caractérisé en ce que** le coupleur à courant porteur en ligne et les moyens (15) de génération sont intégrés dans un même équipement (20).

9. Système (100) selon l'une quelconque des revendications 3 à 7, **caractérisé en ce que** le coupleur à courant porteur en ligne, les moyens (15) de génération et ledit dispositif (3 ; 6) électronique de communication sont intégrés dans un même équipement (20).

10. Système (100) selon l'une quelconque des revendications 8 ou 9, **caractérisé en ce que** ledit équipement (20) est apte à être installé sur un poteau électrique moyenne tension du réseau électrique de distribution.

11. Système (100) selon l'une quelconque des revendications 3 à 10, **caractérisé en ce que** ledit au moins un dispositif électronique de communication est un concentrateur, un répéteur, ou une passerelle CPL/radiofréquence d'un système de télé relève de compteurs électriques ou de surveillance du réseau électrique de distribution.

## Patentansprüche

1. Verfahren zur Versorgung mit niedriger Gleichspannung mindestens einer elektronischen Kommunikationsvorrichtung (3; 6) in einem PLC-Kommunikationssystem, aufweisend ferner eine PLC-Koppler für eine Kopplung an eine Mittelspannungsleitung (8) eines elektrischen Verteilernetzes, **dadurch gekennzeichnet, dass** der PLC-Koppler einen Kopplungskondensator (10) umfasst, der mit der Mittelspannungsleitung (8) elektrisch verbunden ist, wobei das Verfahren einen Erzeugungsschritt eines ersten Werts niedriger Gleichspannung auf der Basis einer Strom-Spannungs-Wandlung des Fehlstroms relativ zum Kopplungskondensator (10) umfasst, wobei der erste Wert niedriger Gleichspannung imstande ist, als Versorgung von mindestens einem aktiven elektronischen Bauteil (13) der mindestens einen elektronischen Kommunikationsvorrichtung (3; 6) zu dienen.

2. Verfahren nach Anspruch 1, **dadurch gekennzeichnet, dass** es ferner einen Umwandlungsschritt des ersten Werts niedriger Gleichspannung in einen zweiten Wert niedriger Gleichspannung unter dem ersten Wert niedriger Gleichspannung aufweist, wobei der zweiten Wert niedriger Gleichspannung imstande ist, als Versorgung von mindestens einem anderen aktiven elektronischen Bauteil (12) der mindestens einen elektronischen Kommunikationsvorrichtung (3; 6) zu dienen.

3. System (100) zur Versorgung mit niedriger Gleichspannung mindestens einer elektronischen Kommunikationsvorrichtung (3; 6) in einem PLC-Kommunikationssystem, aufweisend ferner eine PLC-Koppler für eine Kopplung an eine Mittelspannungsleitung (8) eines elektrischen Verteilernetzes, **dadurch gekennzeichnet, dass** der PLC-Koppler einen Kopplungskondensator (10) umfasst, der mit der Mittelspannungsleitung (8) elektrisch verbunden ist, und dass das System Erzeugungsmittel (15) eines ersten Werts niedriger Gleichspannung auf der Basis einer Strom-Spannungs-Wandlung des Fehlstroms relativ zum Kopplungskondensator (10) umfasst, wobei der erste Wert niedriger Gleichspannung imstande ist, als Versorgung von mindestens einem aktiven elektronischen Bauteil (13) der mindestens einen elektronischen Kommunikationsvorrichtung (3; 6) zu dienen.

4. System (100) nach Anspruch 3, **dadurch gekennzeichnet, dass** die Erzeugungsmittel (15) mindestens eine Umwandlungseinheit aufweisen, umfassend einen Kondensator (16), der mit dem Kopplungskondensator (10) in Reihe verbunden ist, und ein Umwandlungsmittel (17), empfangend am Eingang die Spannung an den Klemmen des Kondensators (16) und bereitstellend den ersten Wert niedriger Gleichspannung.

5. System (100) nach Anspruch 4, **dadurch gekennzeichnet, dass** die Erzeugungsmittel (15) eine ganze Anzahl n größer als 1 Umwandlungseinheiten aufweisen, die miteinander derart verbunden sind, dass die Kondensatoren (16i...l6ₙ) jeder Umwandlungseinheit mit dem Kopplungskondensator in Reihe verbunden sind, wobei jede der Einheiten einen n-ten des ersten Werts niedriger Gleichspannung bereitstellt.

6. System (100) nach einem der Ansprüche 4 oder 5, **dadurch gekennzeichnet, dass** es ferner ein Gleichspannungsabsenkungsmittel (18) aufweist, empfangend am Eingang den ersten Wert niedriger Gleichspannung und bereitstellend einen zweiten Wert niedriger Gleichspannung unter dem ersten Gleichspannungswert.

7. System (100) nach Anspruch 6, **dadurch gekennzeichnet, dass** das Gleichspannungsabsenkungsmittel (18) in die Erzeugungsmittel integriert ist.

8. System (100) nach einem der Ansprüche 3 bis 7, **dadurch gekennzeichnet, dass** der PLC-Koppler und die Erzeugungsmittel (15) in eine selbe Ausrüstung (20) integriert sind.

9. System (100) nach einem der Ansprüche 3 bis 7, **dadurch gekennzeichnet, dass** der PLC-Koppler, die Erzeugungsmittel (15) und die elektronische Kommunikationsvorrichtung (3; 6) in eine selbe Ausrüstung (20) integriert sind.

10. System (100) nach einem der Ansprüche 8 oder 9, **dadurch gekennzeichnet, dass** die Ausrüstung (20) imstande ist, auf einem elektrischen Mittelspannungspfosten des elektrischen Verteilernetzes installiert zu sein.

11. System (100) nach einem der Ansprüche 3 bis 10, **dadurch gekennzeichnet, dass** die mindestens eine elektronische Kommunikationsvorrichtung ein Hub, ein Repeater oder eine PLC/Funkfrequenz-Brücke eines Fernauslesungssystems von elektrischen oder Überwachungszählern des elektrischen Verteilersystems ist.

## Claims

1. A method for supplying low DC voltage for at least one electronic communication device (3; 6) in a powerline communication system further including a powerline communication coupler for coupling to a medium-voltage line (8) of an electrical distribution grid, **characterized in that**, said powerline communication coupler comprising a coupling capacitor (10) electrically connected to the medium-voltage line (8), the method comprises a step for generating a first low DC voltage value from a current-voltage conversion of the leakage current relative to said coupling capacitor (10), said first low DC voltage value being able to serve as a power source for at least one active electronic component (13) of said at least one electronic communication device (3; 6).

2. The method according to claim 1, **characterized in that** it further includes a step for converting said first low DC voltage value into a second low DC voltage value below the first low DC voltage value, said second low DC voltage value being able to serve as a power source for at least one other active electronic component (12) of said at least one electronic communication device (3; 6).

3. A system (100) for supplying low DC voltage for at least one electronic communication device (3; 6) in a powerline communication system, further including a powerline communication coupler for coupling to a medium-voltage line (8) of an electrical distribution grid, **characterized in that** the powerline communication coupler comprises a coupling capacitor (10) electrically connected to said medium-voltage line (8), and **in that** said system comprises means (15) for generating a first low DC voltage value from a current-voltage conversion of the leakage current relative to said coupling capacitor (10), said first low DC voltage value being able to serve as a power source for at least one active electronic component (13) of said at least one electronic communication device (3; 6).

4. The system (100) according to claim 3, **characterized in that** the generating means (15) include at least one conversion unit comprising a capacitor (16) connected in series with the coupling capacitor (10) and a conversion means (17) receiving, as input, the voltage across the terminals of said capacitor (16) and delivering said first low DC voltage value.

5. The system (100) according to claim 4, **characterized in that** the generating means (15) include an integer number n greater than 1 of conversion units connected to one another such that the capacitors (16₁... 16ₙ) of each conversion unit are connected in series with the coupling capacitor, each of said units delivering one n^{th} of said first low DC voltage value.

6. The system (100) according to any one of claims 4 or 5, **characterized in that** it further includes a DC voltage step down means (18) receiving, as input, said first low DC voltage value and delivering a second low DC voltage value below the first DC voltage value.

7. The system (100) according to claim 6, **characterized in that** said DC voltage step down means (18) is integrated into said generating means.

8. The system (100) according to any one of claims 3 to 7, **characterized in that** the powerline communication coupler and the generating means (15) are integrated into a same piece of equipment (20).

9. The system (100) according to any one of claims 3 to 7, **characterized in that** the powerline coupler, the generating means (15) and said electronic communication device (3; 6) are integrated into a same piece of equipment (20).

10. The system according to any one of claims 8 or 9, **characterized in that** said piece of equipment (20) is able to be installed on a medium-voltage electrical pole of the electrical distribution grid.

11. The system (100) according to any one of claims 3 to 10, **characterized in that** said at least one electronic communication device is a concentrator, a repeater, or a PLC/radiofrequency gateway of a system for remotely reading electric meters or monitoring the electrical distribution grid.
